# EUROPEAN PATENT APPLICATION

(11) **EP 4 253 033 A1**
(43) Date of publication of application: **04.10.2023**
(21) Application number: 23165616.6
(22) Date of filing: 30.03.2023
(51) Int. Cl.: B32B 3/26, B32B 3/28, B32B 5/02, B32B 5/06, B32B 25/10

(54) **LAMINATED NONWOVEN FABRIC WITH FOUR-SIDED STRETCHES AND MANUFACTURING METHOD THEREOF**

(30) Priority: 02.04.2022 CN 202210340684
(71) Applicant: Nitto Advanced Components Taicang Co., Ltd., Taicang City, Jiangsu 215434 (CN)
(72) Inventor: Wang, Jun, Taicang City, Jiangsu Province, 215434 (CN)
(74) Representative: Andrejewski - Honke Patent- und Rechtsanwälte Partnerschaft mbB

(57) **Abstract**

The present invention relates to a laminated nonwoven fabric with four-sided stretches, which includes an upper layer of nonwoven fabric, a lower layer of nonwoven fabric, and a middle layer of elastic film sandwiched between them, wherein a plurality of fixed points are arranged between the upper layer of nonwoven fabric, the middle layer of elastic film and the lower layer of nonwoven fabric; wherein the film has a plurality of holes including the fixed points; wherein the upper layer of nonwoven fabric has a wave structure with staggered upper wave peaks and upper wave valleys along its thickness direction, while the lower layer of nonwoven fabric has a wave structure with staggered lower wave peaks and lower wave valleys along its thickness direction; wherein the laminated nonwoven fabric can be stretched and rebounded in transverse and longitudinal directions respectively. The present invention has the advantages of good four-sided stretches and good air permeability, and can be widely used in the fields of elastic ear bands for masks, baby diapers, waistlines of adult incontinence pants, elastic bandages, and the like.

## Description

### FIELD OF THE INVENTION

The present invention belongs to the technical field of laminated nonwoven fabric improvement, and specifically relates to a laminated nonwoven fabric with four-sided stretches and a manufacturing method thereof.

### BACKGROUND OF THE INVENTION

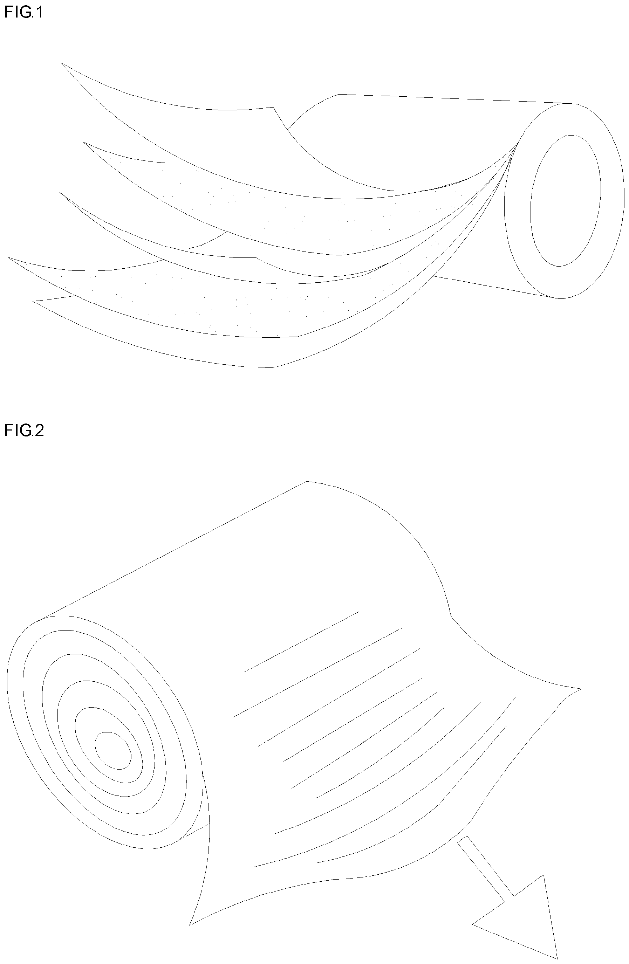

Currently, the common structure of elastic laminated nonwoven fabrics on the market is substantially a three-layer structure: the upper and lower layers are both nonwoven fabrics, the middle layer is an elastic fabric, and there is an adhesive layer between any one of the nonwoven fabrics and the elastic fabric, as shown in FIG. 1. Its production process is as follows: the intermediate layer after being longitudinally stretched is made into an elastic laminated nonwoven fabric through glue bonding, hot pressing, and the like. This type of elastic laminated nonwoven fabric has longitudinal elasticity, as shown in FIG. 2, and is usually used in the fields such as ear bands, diaper waistlines, and elastic bandages.

However, during the use of such elastic laminated nonwoven fabric, the following shortcomings were found: 1. In the manufacturing of end products, due to the longitudinal elasticity of the material, it is necessary to ensure that the unwinding and feeding direction of the material is consistent with the operating direction of the machine, and many machines cannot be adapted for use. 2. The laminated nonwoven fabric has good elasticity only in the longitudinal direction, resulting in a certain degree of ductility in the longitudinal direction (MD direction) of the material, while there is no ductility in the transverse direction (CD direction), and thus during the use of the product, there will be a strong sense of constraint in the transverse direction. 3. Since the product is limited to being longitudinally stretched and due to its limited scope of application, it is unable to expand the market. 4. After the laminated nonwoven fabric is adhesively bonded and hot-pressed, the softness of the product needs to be improved, and the elastic film in the middle layer is almost air-impermeable. The laminated nonwoven fabric can only achieve air permeability additionally through the punching process.

Overall, the main reason for the above shortcomings is that such elastic laminated nonwoven fabric has only longitudinal elasticity and does not have transverse elasticity. Therefore, a laminated nonwoven fabric with four-sided stretches and its manufacturing method are designed to solve the above problems.

It should be noted that the above introduction to the technical background is only intended to facilitate a clear and complete explanation of the technical solution of the present invention and facilitate the understanding of those skilled in the art. The above technical solutions should not be considered as well known to those skilled in the art simply because they are described in the technical background part of the present invention.

### SUMMARY OF THE INVENTION

In order to overcome the shortcomings of the prior arts and achieve the above and other related purposes, the technical solution provided by the present invention is: a laminated nonwoven fabric with four-sided stretches, comprising an upper layer of nonwoven fabric, a lower layer of nonwoven fabric, and a middle layer of elastic film sandwiched between the upper layer and lower layer of nonwoven fabrics, wherein a plurality of fixed points are arranged between the upper layer of nonwoven fabric, the middle layer of elastic film and the lower layer of nonwoven fabric; wherein the upper layer of nonwoven fabric has a wave structure with staggered upper wave peaks and upper wave valleys along its thickness direction, and the lower layer of nonwoven fabric has a wave structure with staggered lower wave peaks and lower wave valleys along its thickness direction; wherein when the intermediate elastic film is in a natural state of zero tension, the intermediate elastic film is laminated onto the upper wave valleys and the lower wave valleys, the laminated positions of each of the upper wave valleys and the lower wave valleys correspond to each other, and the upper wave peaks and the lower wave peaks are both arranged without contact with the intermediate elastic film; and wherein the laminated nonwoven fabric can be stretched and rebounded transversely and longitudinally, respectively.

In a preferred technical solution, when the upper layer of nonwoven fabric and the lower layer of the nonwoven fabric are in a flattened state, the fixing points are uniformly arranged and the fixing points in the adjacent rows are staggered with each other.

In a preferred technical solution, when the laminated nonwoven fabric is stretched longitudinally so that the upper layer of the nonwoven fabric and the lower layer of the nonwoven fabric are in the flattened state, its stretching ratio is 1.5-2.5 times; and when the laminated nonwoven fabric is transversely stretched so that the upper layer of the nonwoven fabric and the lower layer of the nonwoven fabric are in the flattened state, the stretching ratio is 1.5-2.5 times.

In a preferred technical solution, the fixing points are formed by ultrasonic welding; and the intermediate elastic film is provided with a plurality of holes including the fixing points.

The present invention also provides a method for manufacturing a laminated nonwoven fabric with four-sided stretches, comprising the following steps:
step 1: transport the materials of the upper layer of nonwoven fabric, the middle layer of elastic film and the lower layer of nonwoven fabric arranged from top to bottom in a flow line forwardly, wherein all the three materials are ensured in a tensioned state;
step 2: laminating the three-layer materials of the upper layer of nonwoven fabric, the middle layer of elastic film and the lower layer of nonwoven fabric against each other through a pressing roller unit, wherein the pressing roller unit comprises two pressing rollers arranged on top of each other;
step 3: after the three-layer materials has been laminated, rolling laminating the three-layer materials through an ultrasonic laminating unit, wherein the ultrasonic laminating unit comprises a bottom roller with a pattern, the intermediate elastic film under a stretched state passes through the bottom roller together with the upper layer of the nonwoven fabric and the lower layer of nonwoven fabric and melts at the pattern of the bottom roller to form the fixed points by means of ultrasonics, and thereafter, the molten elastic film rebounds around the fixed points and forms holes including the fixed points;
step 4: making the laminated three-layer materials enter into a transverse activation unit for activation, wherein the transverse activation unit includes an upper activation roller and a lower activation roller that are arranged on top of each other and corresponding to each other, wherein the upper activation roller is provided with a plurality of upper teeth and the lower activation roller is provided with a plurality of lower teeth, and the axial positions of the upper teeth are staggered with respect to the axial positions of the lower teeth, wherein through the movement of the upper activation roller and the lower activation roller toward to each other, the staggered upper and lower teeth are meshed with each other, and the upper layer of non-woven fabric and the lower layer of non-woven fabric entering between the upper activation roller and the lower activation roller are broken in a strip-shape, and after the strip-shaped transverse rolling, the elastic film makes the non-woven fabric free of a transverse constraint, achieving a transverse elastic effect;
step 5: then making the laminated materials enter into a tension control unit to adjust the tension for relaxing the laminated materials, so that the elastic film rebounds and the nonwoven fabric forms an S-shaped wave in the cross section;
step 6: collecting the laminated nonwoven fabric.

In a preferred technical solution, the upper activation roller is provided with a plurality of upper activation areas and upper spacing discs, wherein the upper activation areas are spaced apart from the upper spacer discs, and the upper activation areas comprise the plurality of upper teeth; the lower activation roller is provided with a plurality of lower activation areas and lower spacing discs, wherein the lower activation areas are spaced apart from the lower spacing discs, and the lower activation areas comprise the plurality of lower teeth; and when the upper activation areas mesh with the lower activation areas, activated strips are formed in the non-woven fabric.

In a preferred technical solution, in the step 2, the upper layer of nonwoven fabric and the lower layer of nonwoven fabric are respectively pre-stretched longitudinally through a pre-stretching unit respectively before entering into the pressing roller unit, so that a transverse width contraction is formed in the upper layer of nonwoven fabric and the lower layer of nonwoven fabric respectively.

In a preferred technical solution, in the step 2, the intermediate elastic film is pre-stretched longitudinally through a pre-stretching unit before entering into the pressing roller unit, so that a longitudinal stretch of the intermediate elastic film is achieved.

In a preferred technical solution, the pre-stretching unit for the upper layer of nonwoven fabric or the lower layer of nonwoven fabric is composed of two pressing rollers arranged successively from front to rear, wherein the circumferential velocity ratio of the driven front and rear pressing rollers is 1:2 to 1:3, and the upper layer of nonwoven fabric and the lower layer of nonwoven fabric are both transported in an S-shaped wave to achieve the longitudinal pre-stretch.

In a preferred technical solution, the pre-stretching unit for the intermediate elastic film is composed of two pressing rollers arranged successively from front to rear, wherein the circumferential velocity ratio of the driven the front and rear pressing rollers is 1:2 to 1:4, and the intermediate elastic film is transported in an S-shaped wave to achieve the longitudinal pre-stretch.

Due to the use of the above technical solutions, the advantages of the present invention compared to the prior arts are as follows:
1. The laminated nonwoven fabric of the present invention has good four-sided stretches, which can be stretched either transversely or longitudinally, breaking the limitations of the field where laminated nonwoven fabrics can only be stretched longitudinally, and thus can be applied in a wider range.
2. The middle layer of the laminated nonwoven fabric of the present invention uses an elastic film, which provides higher elasticity and resilience compared to traditional elastic fabric, and thus the product performance is improved.
3. The middle layer of film of the laminated nonwoven fabric of the present invention rebounds around the fixed points to form holes including the fixed points, which can make it have good air permeability.
4. The laminated nonwoven fabric of the present invention has both longitudinal and transverse elasticity, and in the manufacturing of end products, the unwinding and feeding direction of the materials is not necessary to be consistent with the operating direction of the machine, so it can be flexibly applied to various machines.
5. The laminated nonwoven fabric of the present invention not only has longitudinal elasticity, but also has transverse elasticity, avoiding the sense of constraint caused by the lack of transverse elasticity in the use of traditional products. It can be widely used in the fields of elastic ear bands for masks, baby diapers, waistlines of adult incontinence pants, elastic bandages, and so on.
6. The present invention utilizes ultrasonics to laminate the three layers of materials without glue, and the product is more soft.

### BRIEF DESCRIPTION OF THE DRAWINGS

FIG. 1 is a schematic diagram of a structure of a traditional laminated nonwoven fabric.
FIG. 2 is a schematic diagram of a longitudinally stretchable laminated nonwoven fabric roll.
FIG. 3 is a schematic diagram of a laminated nonwoven fabric roll that can be stretched both transversely and longitudinally.
FIG. 4 is a schematic diagram of a manufacturing process according to the present invention.
FIG. 5 is a schematic diagram of a film according to the present invention in a longitudinal stretched state.
FIG. 6 is a schematic diagram of a nonwoven fabric according to the present invention when being longitudinal stretched in a transverse contraction state.
FIG. 7 is a schematic diagram of a surface of laminated materials according to the present invention in a relaxed state.
FIG. 8 is a graph of surface texture of a laminated nonwoven fabric according to the present invention.
FIG. 9 is a cross-sectional view of a laminated nonwoven fabric according to the present invention.
FIG. 10 is a schematic diagram of the arrangement of fixed points according to the present invention.
FIG. 11 is a schematic diagram of a transverse activation unit according to the present invention.
FIG. 12 is a schematic diagram of film holes according to the present invention.

In the above drawings, 1 upper activation roller, 2 lower activation roller, 3 upper tooth, 4 lower tooth, 5 upper spacing disc, and 6 lower spacing disc.

### DETAILED DESCRIPTION OF THE DRAWINGS

The following specific embodiments illustrate the implementation of the present invention. Those familiar with this technology can easily understand the other advantages and functions of the present invention from the content disclosed in this specification.

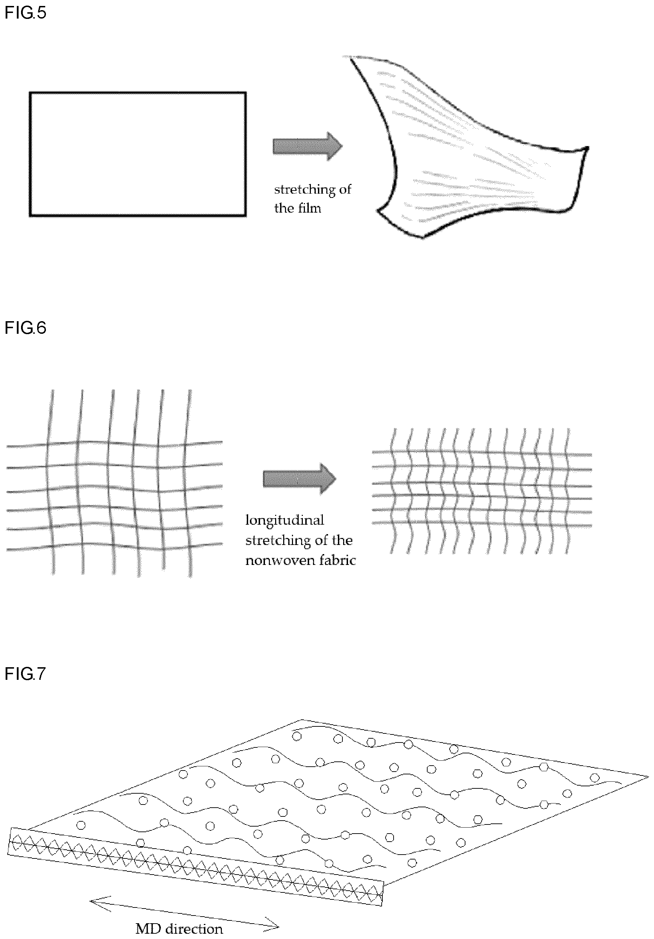

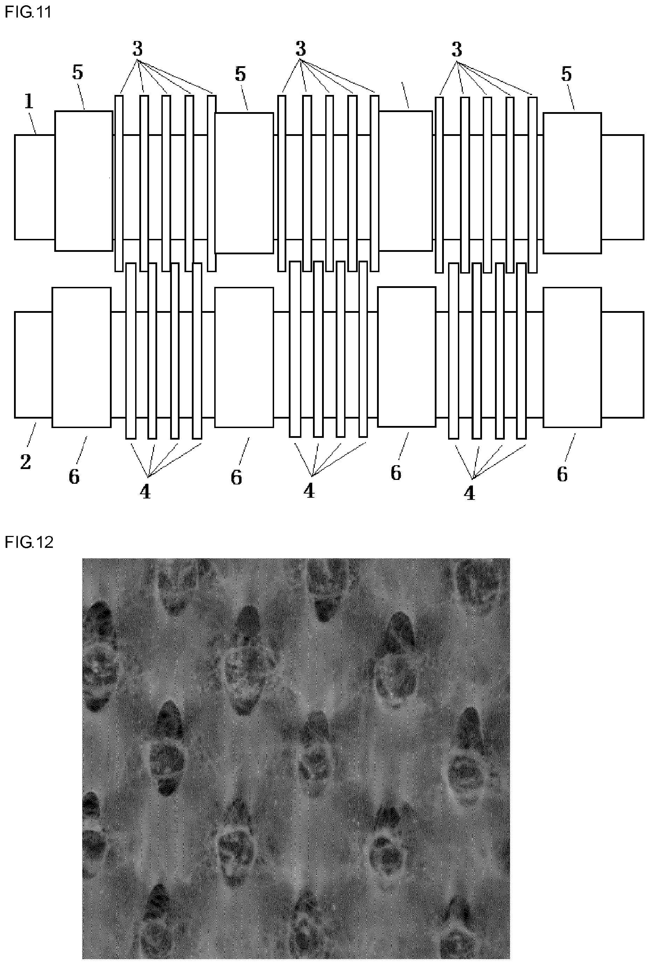

Please refer to FIGS. 1 to 12. It is important to note that, in the description of the present invention, the terms "center", "up", "down", "left", "right", "vertical", "horizontal", "inside", "outside", and the like indicate the orientation or positional relationships based on the orientation or positional relationships shown in the attached drawings, or indicate the orientation or positional relationships usually placed when the product of the present invention is used, only for the convenience of describing the present invention and simplifying the description, rather than indicating or implying that the device or element referred to must have a specific orientation, be configured and operated in a specific orientation. Thus, they cannot be understood as limiting the present invention. In addition, the terms "first", "second", "third", and the like are only used to distinguish descriptions and cannot be understood as indicating or indicative of relative importance. The terms "horizontal", "vertical", and "perpendicular" do not mean that the component is absolutely horizontal or perpendicular, but can be slightly tilted. For example, the "horizontal" simply means that its direction is more horizontal compared to "vertical", and does not mean that the component must be completely horizontal, but can be slightly tilted.

In the description of the present invention, it should also be noted that, unless otherwise explicitly specified and limited, the terms "arrange", "mount", "connect", and "couple" should be understood in a broad way. For example, two components can be fixed connected, detachable connected, or integrally connected; the two components can be mechanically connected, can be electrically connected, can be directly connected, or can be indirectly connected through an intermediate means; and the two components can be communicated inside themselves. For those skilled in the art, the specific meanings of the above terms in the present invention can be understood according to specific circumstances.

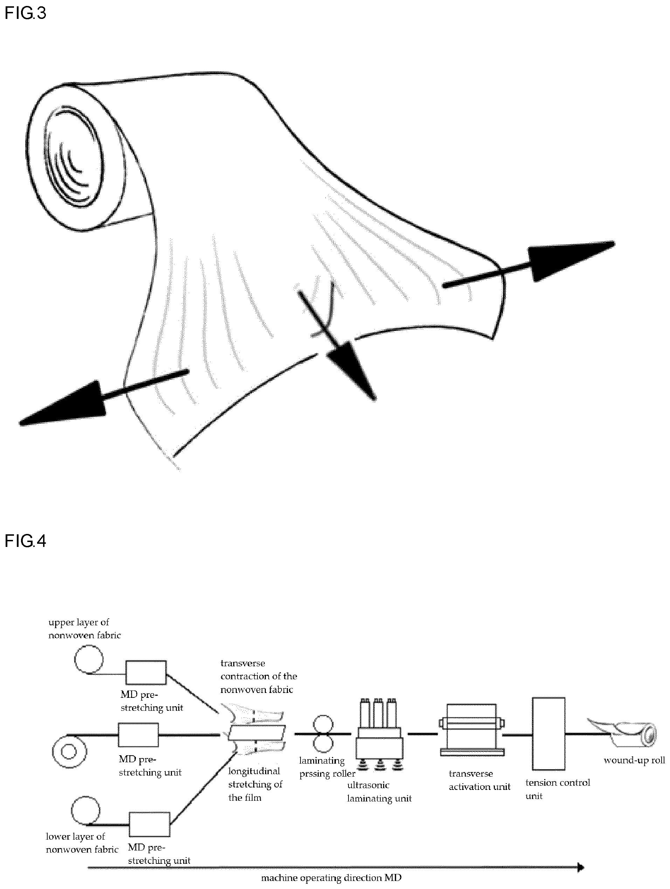

In the embodiments, as shown in FIGS. 3 to 12, a laminated nonwoven fabric with four-sided stretches includes an upper layer of nonwoven fabric, a lower layer of nonwoven fabric, and a middle layer of elastic film sandwiched between the upper layer and the lower layer of nonwoven fabrics, wherein a plurality of fixed points are arranged between the upper layer of nonwoven fabric, the middle layer of elastic film and the lower layer of nonwoven fabric; wherein the upper layer of nonwoven fabric has a wave structure with staggered upper wave peaks and upper wave valleys along its thickness direction, while the lower layer of nonwoven fabric has a wave structure with staggered lower wave peaks and lower wave valleys along its thickness direction; wherein when the intermediate elastic film is in a natural state of zero tension, the intermediate elastic film is laminated onto the upper and lower wave valleys, and the laminated positions of the upper and lower wave valleys correspond to each other. The upper and lower wave peaks are both arranged without contact with the intermediate elastic film; and the laminated nonwoven fabric can be stretched and rebounded in the transverse and longitudinal directions respectively.

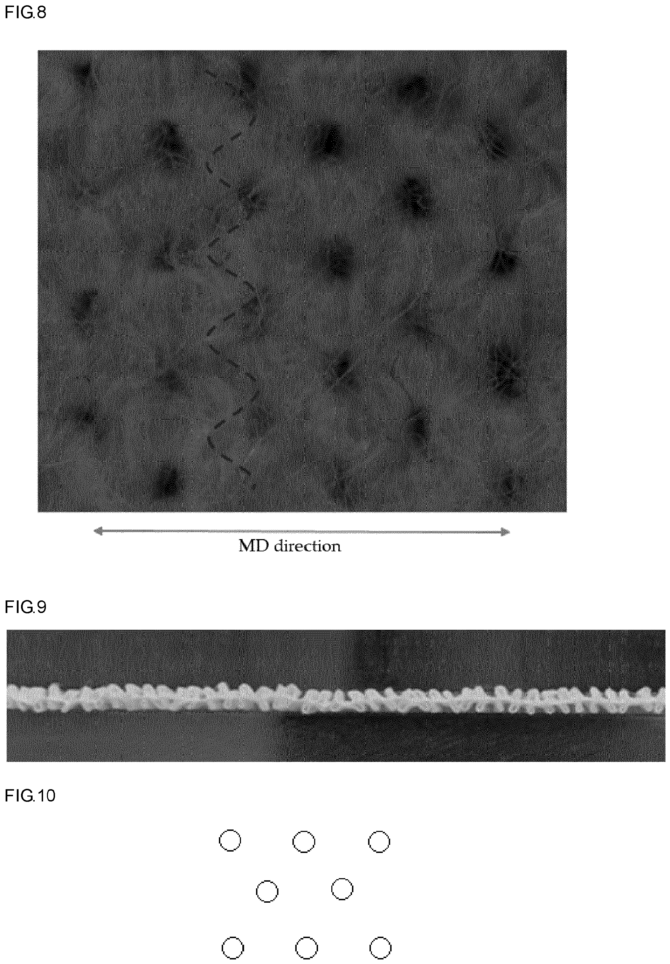

As shown in FIGS. 8, 10, and 12, when the upper layer of nonwoven fabric and the lower layer of nonwoven fabric are in a flatten state, the fixed points are uniformly arranged and staggered with each other in adjacent rows. The fixing points are formed by ultrasonic welding. The middle layer of elastic film is provided with a plurality of holes including the fixed points. The shapes of the fixed points formed by ultrasonic welding can be designed into various shapes, such as circular or polygonal shapes. The holes including the fixed points formed by the rebound of the molten elastic film around the fixed points generate corresponding shapes according to the actual tension. In this embodiment, the fixed points are designed to be circular and staggered in the non-woven fabric. Here, the holes formed by the rebound are oval.

When the laminated nonwoven fabric is stretched longitudinally so that the upper layer of the nonwoven fabric and the lower layer of the nonwoven fabric are in a flatten state, its stretching ratio is 1.5-2.5 times. When the laminated nonwoven fabric is stretched transversely so that the upper layer of nonwoven fabric and the lower layer of nonwoven fabric are in a flattened state, its stretching ratio is 1.5-2.5 times.

As shown in FIG. 4, a method for manufacturing the laminated nonwoven fabric with four-sided stretches comprises the following steps.

In step 1, the materials of the upper layer of nonwoven fabric, the middle layer of elastic film and the lower layer of nonwoven fabric arranged from top to bottom are transported forwardly in a flow line, wherein all the three materials are ensured in a tensioned state.

In step 2, the upper layer of nonwoven fabric and the lower layer of nonwoven fabric are longitudinally pre-stretched through a pre-stretching unit respectively, so that a transverse width contraction is generated in the upper layer of nonwoven fabric and the lower layer of nonwoven fabric respectively (as shown in FIG. 4). The pre-stretching units for the upper layer and lower layer of nonwoven fabrics are composed of two pressing rollers arranged successively from front to rear respectively, wherein the circumferential velocity ratio of the driven front and rear pressing rollers is 1:2 to 1:3, so that the upper layer and lower layer of nonwoven fabrics are both transported in an S-shape to achieve a longitudinal pre-stretch, and the longitudinal pre-stretch is of 2-3 times.

The middle layer of elastic film is longitudinally pre-stretched through a pre-stretching unit, so that the middle layer of elastic film can be longitudinally pre-stretched. The pre-stretching unit for the middle layer of elastic film is composed of two pressing rollers arranged successively from front to rear, wherein the circumferential velocity ratio of the driven front and rear pressing rollers is 1:2 to 1:4, so that the middle layer of nonwoven fabric is transported in an S-shape to achieve a longitudinal pre-stretch, and the longitudinal pre-stretch is of 2-4 times.

The three-layer materials composed of the upper layer of nonwoven fabric, the middle layer of elastic film and the lower layer of nonwoven fabric are laminated against each other through a pressing roller unit, which is composed of two pressing rollers arranged on top of each other.

In step 3, after the three-layer materials have been laminated, the three-layer materials are rolling-laminated through an ultrasonic laminating unit. The ultrasonic laminating unit comprises a bottom roller with a pattern. The middle layer of elastic film under a stretched state passes through the bottom roller together with the upper layer and lower layer of nonwoven fabrics, and melts at the pattern of the bottom roller to form the fixed points by means of ultrasonics. Thereafter, the molten elastic film can rebound around the fixed points and form holes including the fixed points.

In step 4, the laminated three-layer materials enter into a transverse activation unit for activation. The transverse activation unit includes an upper activation roller 1 and a lower activation roller 2 that are arranged on top of each other and corresponding to each other. The upper activation roller 1 is provided with a plurality of upper teeth 3, and the lower activation roller 2 is provided with a plurality of lower teeth 4. The axial positions of the upper teeth 3 are staggered with respect to the axial positions of the lower teeth 4, and the staggered upper teeth 3 and lower teeth 4 are meshed with each other through the movement of the upper activation roller 1 and the lower activation roller 2 towards to each other, so that the upper layer and lower layer of non-woven fabrics entering between the upper activation roller 1 and the lower activation roller 2 are broken in a strip shape. After the transverse strip-shaped rolling, the elastic film makes the non-woven fabric free of a transverse constraint, achieving a transverse elastic effect.

The upper activation roller 1 is provided with a plurality of upper activation areas and upper spacing discs, wherein the upper activation areas are spaced apart from the upper spacing discs 5, and the upper activation areas comprise the plurality of upper teeth 3. The lower activation roller 2 is provided with a plurality of lower activation areas and lower spacing discs 6, wherein the lower activation areas are spaced apart from the lower spacing discs, and the lower activation areas comprise the plurality of lower teeth 4. When the upper activation areas mesh with the lower activation areas, activated strips are formed in the non-woven fabric.

The function of the spacing discs is to adjust the distance between the activated strips of the nonwoven fabric through their different widths, thereby controlling the distance between the activated areas in the nonwoven fabric. The width between the activated strips of the nonwoven fabric is controlled by the number of the teeth. The teeth on each of the activated strips of the nonwoven fabric should be evenly arranged, and the more the number of the teeth is, the greater the width between the activated strips of the nonwoven fabric is. The degree of broken to the nonwoven fabric is adjusted and controlled by the radial distance between the upper activation roller 1 and the lower activation roller 2.

In step 5, then the laminated materials enter into a tension control unit to adjust the tension for relaxing the laminated materials, so that the elastic film rebounds, and the nonwoven fabric forms an S-shaped wave in the cross section.

In step 6, the laminated nonwoven fabric is collected. The laminated materials are wound in a relaxed state at a very low tension through the tension control unit, to obtain a laminated non-woven fabric roll with four-sided stretches, and the surface of the materials is provided with a ultrasonic pattern (as shown in FIG. 10). This staggered dot pattern can support the transverse and longitudinal stretching ductility of the materials.

The laminated nonwoven fabrics with different patterns have different air permeability. The advantage of ultrasonic welding is that, it can form many small holes for air permeability, while the traditional adhesive manufacturing technology and films are air impermeable.

In the above embodiment, for the intermediate elastic film, a film with a thickness of 30 µm to 50 µm is used. For the film material, SBS or POE etc., which is a type of thermoplastic elastomer, is used. At room temperature, it is characterized by the presence of soft and hard chain segments (or phases) in the chain of a single high polymer or in an interpenetrating matrix formed from constituent materials. At higher temperature, these structures will become fluid and flow under pressure, and form a matrix containing an elastomer again upon cooling. The film has good longitudinal and transverse elasticity.

The upper layer and lower layer of nonwoven fabrics are made of PP spunbonded nonwoven fabric with a fabric weight of 10-20g.

**Table 1: the tests for the mechanical properties and air permeability of samples**

| **Test item** | **Test method** | **Unit** | **Sample 1** | **Sample 2** | **Sample 3** |
|---|---|---|---|---|---|
| basis weight | ASTM D5035 | g/m² | 76.7 | 78.0 | 78.0 |
| MD stretching strength | ASTM D3776 | N/2lnch | 53.1 | 58.9 | 62.4 |
| MD stretching ratio of broken material | ASTM D3776 | % | 455.6 | 424.5 | 383.1 |
| CD stretching strength | ASTM D3776 | N/2lnch | 23.7 | 22.8 | 21.0 |
| CD stretching ratio of broken material | ASTM D3776 | % | 364.5 | 426.1 | 418.0 |
| air permeability | ISO 9237 | mm/s | 287.0 | 275.0 | 293.0 |

The laminated nonwoven fabric and its manufacturing method according to the present invention utilize a film with both longitudinal and transverse elasticity for the middle layer. The elastic film is firstly pre-stretched longitudinally, while the upper layer and lower layer of the nonwoven fabrics are also stretched through a longitudinal pre-stretching unit respectively, so that the nonwoven fabrics are contracted in the transverse width (CD direction). Then, they are laminated through an ultrasonic laminating unit with a special patterned roller. Thereafter, the transverse strips of the nonwoven fabric are broken through a transverse activation unit, so that the film makes the non-woven fabric free of a constraint to the transverse elasticity. After the materials are relaxed through a tension adjustment unit, an S-shaped wave is formed on the surface of the nonwoven fabric, which produces an elastic laminated nonwoven fabric with good air permeability and high elasticity on both the longitudinal sides (MD direction) and the transverse sides (CD direction).

The above embodiments only exemplify the principle and function of the present invention, and are not intended to limit the present invention. Anyone familiar with this technology can modify or change the above embodiments without violating the spirit and scope of the present invention. Therefore, all equivalent modifications or changes made by those with ordinary knowledge in the technical field without departing from the spirit and technical idea disclosed in the present invention should still be covered by the claims of the present invention.

## Claims

1. A laminated nonwoven fabric with four-sided stretches, comprising an upper layer of nonwoven fabric, a lower layer of nonwoven fabric, and a middle layer of elastic film sandwiched between the upper layer and lower layer of nonwoven fabrics, **characterized in that**, a plurality of fixed points are arranged between the upper layer of nonwoven fabric, the middle layer of elastic film and the lower layer of nonwoven fabric; wherein the upper layer of nonwoven fabric has a wave structure with staggered upper wave peaks and upper wave valleys along its thickness direction, and the lower layer of nonwoven fabric has a wave structure with staggered lower wave peaks and lower wave valleys along its thickness direction; wherein when the intermediate elastic film is in a natural state of zero tension, the intermediate elastic film is laminated onto the upper wave valleys and the lower wave valleys, the laminated positions of each of the upper wave valleys and the lower wave valleys correspond to each other, and the upper wave peaks and the lower wave peaks are both arranged without contact with the intermediate elastic film; and wherein the laminated nonwoven fabric can be stretched and rebounded transversely and longitudinally, respectively.

2. The laminated nonwoven fabric with four-sided stretches according to claim 1, **characterized in that**, when the upper layer of nonwoven fabric and the lower layer of the nonwoven fabric are in a flattened state, the fixing points are uniformly arranged and the fixing points in the adjacent rows are staggered with each other.

3. The laminated nonwoven fabric with four-sided stretches according to claim 2, **characterized in that**, when the laminated nonwoven fabric is stretched longitudinally so that the upper layer of the nonwoven fabric and the lower layer of the nonwoven fabric are in the flattened state, its stretching ratio is 1.5-2.5 times; and **in that**, when the laminated nonwoven fabric is transversely stretched so that the upper layer of the nonwoven fabric and the lower layer of the nonwoven fabric are in the flattened state, the stretching ratio is 1.5-2.5 times.

4. The laminated nonwoven fabric with four-sided stretches according to claim 3, **characterized in that**, the fixing points are formed by ultrasonic welding; and **in that**, the intermediate elastic film is provided with a plurality of holes including the fixing points.

5. A method for manufacturing a laminated nonwoven fabric with four-sided stretches according to any one of claims 1 to 4, **characterized in that**, the method comprises the following steps:
step 1: transport the materials of the upper layer of nonwoven fabric, the middle layer of elastic film and the lower layer of nonwoven fabric arranged from top to bottom in a flow line forwardly, wherein all the three materials are ensured in a tensioned state;
step 2: laminating the three-layer materials of the upper layer of nonwoven fabric, the middle layer of elastic film and the lower layer of nonwoven fabric against each other through a pressing roller unit, wherein the pressing roller unit comprises two pressing rollers arranged on top of each other;
step 3: after the three-layer materials has been laminated, rolling laminating the three-layer materials through an ultrasonic laminating unit, wherein the ultrasonic laminating unit comprises a bottom roller with a pattern, the intermediate elastic film under a stretched state passes through the bottom roller together with the upper layer of the nonwoven fabric and the lower layer of nonwoven fabric and melts at the pattern of the bottom roller to form the fixed points by means of ultrasonics, and thereafter, the molten elastic film rebounds around the fixed points and forms holes including the fixed points;
step 4: making the laminated three-layer materials enter into a transverse activation unit for activation, wherein the transverse activation unit includes an upper activation roller and a lower activation roller that are arranged on top of each other and corresponding to each other, wherein the upper activation roller is provided with a plurality of upper teeth and the lower activation roller is provided with a plurality of lower teeth, and the axial positions of the upper teeth are staggered with respect to the axial positions of the lower teeth, wherein through the movement of the upper activation roller and the lower activation roller toward to each other, the staggered upper and lower teeth are meshed with each other, and the upper layer of non-woven fabric and the lower layer of non-woven fabric entering between the upper activation roller and the lower activation roller are broken in a strip-shape, and after the strip-shaped transverse rolling, the elastic film makes the non-woven fabric free of a transverse constraint, achieving a transverse elastic effect;
step 5: then making the laminated materials enter into a tension control unit to adjust the tension for relaxing the laminated materials, so that the elastic film rebounds and the nonwoven fabric forms an S-shaped wave in the cross section;
step 6: collecting the laminated nonwoven fabric.

6. The method for manufacturing a laminated nonwoven fabric with four-sided stretches according to claim 5, **characterized in that**, the upper activation roller is provided with a plurality of upper activation areas and upper spacing discs, wherein the upper activation areas are spaced apart from the upper spacer discs, and the upper activation areas comprise the plurality of upper teeth; **in that**, the lower activation roller is provided with a plurality of lower activation areas and lower spacing discs, wherein the lower activation areas are spaced apart from the lower spacing discs, and the lower activation areas comprise the plurality of lower teeth; and **in that**, when the upper activation areas mesh with the lower activation areas, activated strips are formed in the non-woven fabric.

7. The method for manufacturing a laminated nonwoven fabric with four-sided stretches according to claim 5, **characterized in that**, in the step 2, the upper layer of nonwoven fabric and the lower layer of nonwoven fabric are respectively pre-stretched longitudinally through a pre-stretching unit respectively before entering into the pressing roller unit, so that a transverse width contraction is formed in the upper layer of nonwoven fabric and the lower layer of nonwoven fabric respectively.

8. The method for manufacturing a laminated nonwoven fabric with four-sided stretches according to claim 7, **characterized in that**, in the step 2, the intermediate elastic film is pre-stretched longitudinally through a pre-stretching unit before entering into the pressing roller unit, so that a longitudinal stretch of the intermediate elastic film is achieved.

9. The method for manufacturing a laminated nonwoven fabric with four-sided stretches according to claim 7, **characterized in that**, the pre-stretching unit for the upper layer of nonwoven fabric or the lower layer of nonwoven fabric is composed of two pressing rollers arranged successively from front to rear, wherein the circumferential velocity ratio of the driven front and rear pressing rollers is 1:2 to 1:3, and the upper layer of nonwoven fabric and the lower layer of nonwoven fabric are both transported in an S-shaped wave to achieve the longitudinal pre-stretch.

10. The method for manufacturing a laminated nonwoven fabric with four-sided stretches according to claim 8, **characterized in that**, the pre-stretching unit for the intermediate elastic film is composed of two pressing rollers arranged successively from front to rear, wherein the circumferential velocity ratio of the driven the front and rear pressing rollers is 1:2 to 1:4, and the intermediate elastic film is transported in an S-shaped wave to achieve the longitudinal pre-stretch.
